# EUROPEAN PATENT SPECIFICATION

(11) **EP 2 194 012 B1**
(45) Date of publication and mention of the grant of the patent: **25.07.2012**
(21) Application number: 08170671.5
(22) Date of filing: 04.12.2008
(51) Int. Cl.: B65G 65/23, B65G 47/244, B65G 47/248, B65G 43/00

(54) **A device for unloading the contents of a container,**
Vorrichtung zum Entladen des Inhalts eines Behälters
Dispositif pour le déchargement de contenu d'un récipient

(43) Date of publication of application: 09.06.2010
(73) Proprietor: Ingenieursbureau Moderniek B.V., 3762 EV Soest (NL)
(72) Inventor: Nijmeijer, Johannes Jan, 3762 VC, Soest (NL)
(74) Representative: Zonneveld, Hendrik Jan

(56) References cited:
- EP-A- 0 599 228
- EP-A- 0 704 392
- DE-A1- 19 617 413
- NL-C2- 1 028 666
- US-A- 4 744 715
- US-A- 5 165 520
- US-A- 5 261 521
- US-A1- 2005 092 580
- US-A1- 2005 281 662
- US-A1- 2008 260 506
- US-B1- 6 634 846

## Description

The present invention relates to a device for unloading the contents of a container, comprising a tilting apparatus for tilting a container towards an opening thereof in a discharge condition of the apparatus.

Such a device is known from NL 1028666. The known device is suitable for unloading the contents of luggage containers used in aircrafts. The tilting apparatus lifts a container to a higher height level and tilts the container towards an opening thereof. The opening of the container is located at one side of the container. The prior art device comprises a shaking mechanism for shaking a container so as to remove retained pieces out of the container.

US 2008/260506, which discloses the preamble of claim 1, is related to a device for unloading a container having a removal opening which has a rotatably mounted supporting surface counted to turn around a first turning axis, a rotatably mounted retaining means, and a synchronizing means. The unloading device causes a container on the supporting surface to tilt so that the removal opening of the tilted container points obliquely or vertically downwards. The retaining means prevent an article inside the tilted container from moving linearly through the removal opening. The retaining means is mounted to turn around a second turning axis. The synchronizing means is configured for synchronizing turning of the supporting surface around the first, turning axis, wherein the retaining means turns around the second turning axis. The synchronized turning of the supporting surface and retaining means causes the container standing on the supporting surface to tilt such that the removal opening of the tilted container points obliquely or vertically downwards.

US 6,634,846 is related to a process and a device for unloading a mail piece container, open at the top, with sidewalls that slant toward the outside, that is loaded with mail pieces that stand upright next to one another. According to this document, the mail piece stack, after having been compressed, is held by holding supports that are inserted into the container and that feature driven revolving conveyor bands. While the supports are being inserted, the conveyor bands are driven in such a way that the conveyor band segments in contact with the mail piece stack are motionless with respect to the mail pieces. Next, the container is tilted by >90 DES along with the mail pieces and the holding supports. After the container is tilted back somewhat, a base plate is inserted and the whole ensemble is tilted back to the point where the stack stands on the horizontally positioned base plate. Then the container is removed towards the bottom.

US 4,744,715 is related to a wafer transfer apparatus. Wafers stocked in a first wafer carrier are transferred to a second wafer carrier bey way of a first opening and a second opening provided respectively in the first and the second wafer carriers, and by way of a mobile wafer holder. Initially, the wafer carriers hold the wafers horizontal, with their openings facing sideways. The carriers are then turned so that the first and second openings are directed downward with the wafers vertical. The wafers in the first wafer carrier are then received and supported by a wafer supporter provided in the wafer holder and installed in the wafer holder by moving down the supporter from the now downward facing first opening through an upward facing third opening of the wafer holder.

With the wafers installed the wafer holder is shifted until the third opening confronts the downward facing second opening. The wafers held in the wafer holder are transferred to the second wafer carrier by moving the wafer supporter upwards, then the second wafer carrier is turned so that the second opening again faces sideways, and wafer transference is completed.

The object of the invention is to provide a device for unloading the contents of a container which has improved unloading characteristics.

This is achieved by the device according to claim 1.

These features provide the opportunity to move a part of the discharge member into the container and touch a retained piece of luggage in the container under operating conditions. Such a piece may be caught behind a rim of the opening, for example, and the discharge member may push the piece slightly upwards such that it may fall out of the container through the opening thereof. This means that emptying a container happens very efficiently by using the device according to the invention.

The discharge member comprises an arm having an end portion which can be moved into the container, wherein the end portion is provided with an activating element which is movable with respect to the arm for loosening retained contents in the container. This means that the arm can move up to a retained article in the container and the activating element can move the article with respect to the arm so as to improve the unloading characteristics further.

In a practical embodiment the activating element is a rotatable drum, whereas the rotatable drum may be drivable in opposite directions.

The drum may be provided with protrusions projecting outwardly from the circumferential side thereof so as to improve grip of the drum on a retained article in the container.

The discharge member may be pivotable about a pivoting axis. This may be built-up compactor and function faster than in case of applying a our telescopically functioning discharge member, for example. The pivoting axis may be located such that only a portion of the discharge member is movable into the container when the tilting apparatus is in its discharge condition.

Preferably, the discharge member is movable parallel to the pivoting axis, because this provides the opportunity to enter the container over a wide range.

The discharge member may be controllable by a remote control device, for example a joy stick.

The device can be provided with an orientation conveyor for conveying and reorienting unloaded articles of the container, wherein the conveyor comprises a supporting surface for supporting and transporting the articles which supporting surface is movable in a conveying direction, a detection device for detecting the orientation of an article on the supporting surface, drivable rotation members being rotatable about rotation axes extending upwardly and being located downstream of the detection device and spaced with respect to each other in the conveying direction, wherein the rotation members are movable transversely with respect to the conveying direction, and a control device for controlling a drive of the rotation members on the basis of information received from the detection device. It appears that the orientation conveyor is very effective to reorient an article on the supporting surface which is supplied in a random orientation to the orientation conveyor. The orientation conveyor provides the opportunity to push one driven rotation member against one side of a passing article on the supporting surface and successively push another driven rotation member against an opposite side of the passing article. The detection device may comprise a camera including an image recognition system, for example.

The device may be provided with a turning apparatus for turning an article comprising a supporting surface for supporting the article, a wheel detection device for detecting wheels that may be present at the outer side of an article and for detecting the location of the wheels at the article on the supporting surface, a turning mechanism for turning an article such that the wheels thereof become free of the supporting surface, wherein the turning mechanism is located downstream of the wheel detection device, and a control device for controlling a drive of the turning mechanism on the basis of information received from the wheel detection device. This configuration of the device has the advantage that an article comprising wheels, such as a trolley suit case, is turned such that the wheels no longer rest on the supporting surface which avoids the phenomenon of driving the wheels of an article in case of driving the supporting surface for transporting the article, whereas the article itself remains at the same location. This phenomenon might typically happen when the article's wheels rest on a driven belt of a conveyor.

An orientation conveyor for conveying and reorienting articles may comprise a supporting surface for supporting and transporting the articles which is movable in a conveying direction, a detection device for detecting the orientation of an article on the supporting surface, drivable rotation members being rotatable about rotation axes extending upwardly and being located downstream of the detection device and spaced with respect to each other in the conveying direction, wherein the rotation members are movable transversely with respect to the conveying direction, and a control device for controlling a drive of the rotation members on the basis of information received from the detection device. In practice the rotation members may be drums or the like.

Preferably, the rotation speed of the rotation members is controllable since this appears to be very effective in order to move an article to a desired orientation.

A turning apparatus for turning an article may comprise a supporting surface for supporting the article, a wheel detection device for detecting wheels that may be present at the outer side of an article and for detecting the location of the wheels at the article on the supporting surface, a turning mechanism for turning an article such that the wheels thereof become free of the supporting surface, wherein the turning mechanism is located downstream of the wheel detection device, and a control device for controlling a drive of the turning mechanism on the basis of information received from the wheel detection device.

The supporting surface may be formed by a first drivable conveyor belt and a second drivable conveyor belt, both for supporting and transporting an article, extending substantially parallel to each other but angled with respect to each other about a longitudinal axis extending parallel to the belts, wherein the turning mechanism can rotate the first and second conveyor belt synchronously about an axis extending parallel to the longitudinal axis between a position in which the second conveyor belt is located at a substantially higher level than the first conveyor belt and a position in which the first conveyor belt is located at a substantially higher level than the second conveyor belt. In this case an article of which the wheels rest on the first conveyor belt may be turned such that it falls on the second conveyor belt such that the wheels of the article are free from the second conveyor belt.

The turning apparatus may be provided with a cam which is located at a location where planes through upper surfaces of the first conveyor belt and the second conveyor belt intersect, wherein the cam is adapted such that its width is smaller than the widths of the belts and such that it projects above the upper surfaces of the first conveyor belt and second conveyor belt as seen in cross section of the belts.

The invention will hereafter be elucidated with reference to the schematic drawings illustrating an embodiment of the invention by way of example.

Fig. 1 is a side view of an embodiment of the device according to the invention.

Fig. 2 is a view along the line II-II in Fig. 1.

Fig. 3a-3c are frontal and side views of different container embodiments which can be unloaded by the device according to the invention.

Fig. 4 is a frontal view of a part of the device, showing a holding mechanism for holding a closure of the container.

Fig. 5 is a side view of the holding mechanism of Fig. 4.

Fig. 6 is a plan view of an embodiment of an orientation conveyor of an embodiment of the device according to the invention.

Fig. 7 is a side view of the embodiment of Fig. 6.

Fig. 8 is a plan view of an embodiment of a turning apparatus of an embodiment of the device according to the invention.

Fig. 9 is a side view of the embodiment of Fig. 8.

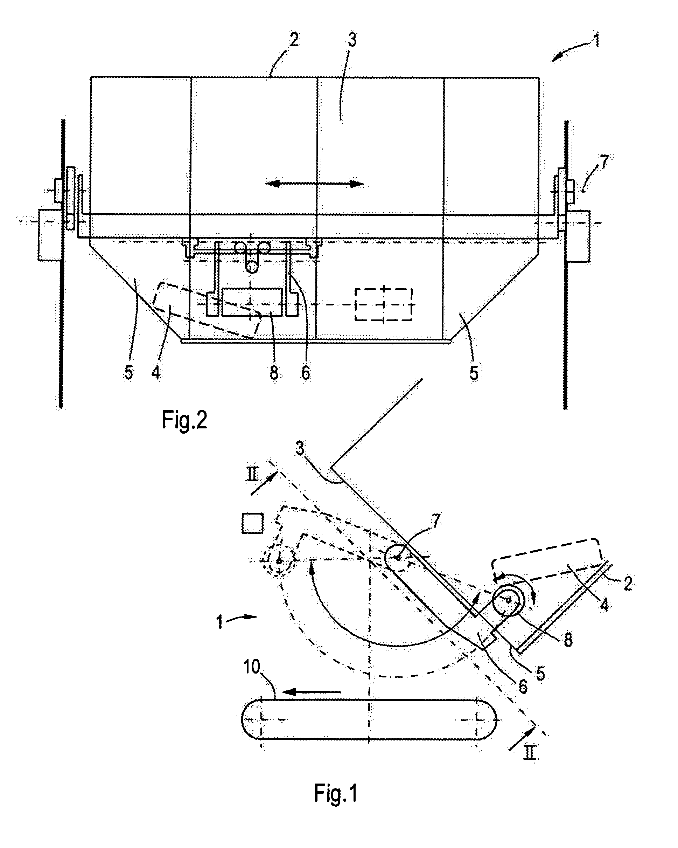

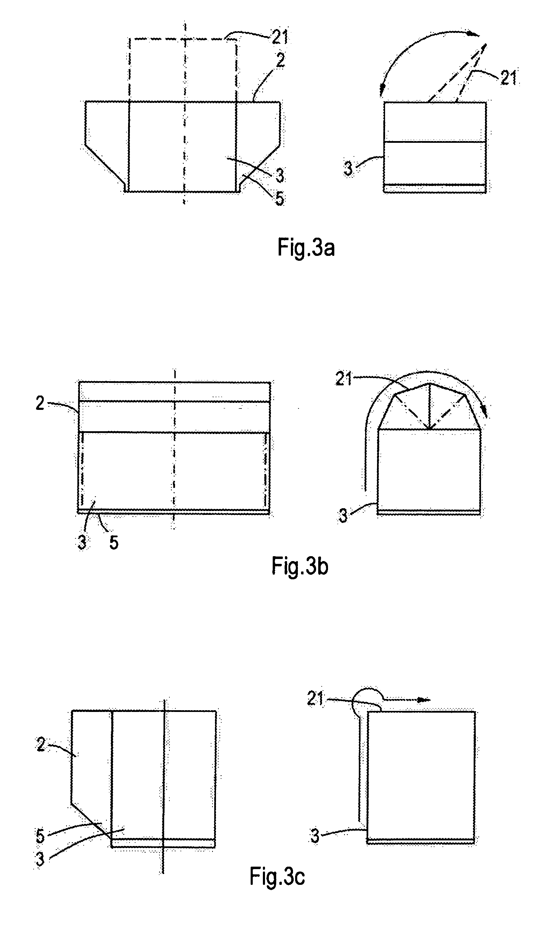

Figs. 1 and 2 show different views of an embodiment of the device 1 according to the invention. The device 1 is suitable for unloading the contents of a container 2. The container 2 may be used for containing luggage in aircrafts and may have a typical shape for fitting in an aircraft, as can be seen in Figs. 3a-3c. In case of unloading a loaded container 2 a lifting apparatus (not shown) of the device 1 lifts the container 2 to a higher height level and tilts the container 2 towards an opening 3 thereof. The opening 3 of the container 2 is located at one side of the container 2. The container 2 as well as the opening 3 may have different shapes as can be seen in Figs. 3a-3c. In the situation as shown in Fig. 1 the tilting apparatus is in its discharge condition, which means that the container 2 is oriented such that the opening 3 thereof is facing downwardly. The opening 3 of the container 2 may be closed in numerous ways. Fig. 3a shows an embodiment of a container 2 in which the opening 3 can be closed by a rigid but foldable closure 21. In an open condition the closure 21 opens the opening 3 at one side of the container 2 as well as a portion of the upper side of the container 2. The embodiment of Fig. 3b comprises a closure 21 which can be lifted and placed over the top of the container 2. The closure 21 may be a sheet, for example. Fig. 3c shows still another embodiment of the container 2, in which the closure 21 of the opening 3 can be moved and placed onto the top of the container 2.

Figs. 1 and 2 illustrate a situation in which the container 2 is emptied almost entirely, but a single luggage piece 4 is retained. Such a piece 4 may be caught behind a rim 5 forming an edge of the opening 3, see Fig. 3. Retained pieces 4 may be unloaded by a shaking mechanism. The device 1 according to the invention provides an alternative or additional solution for unloading retained pieces 4.

The embodiment of the device 1 as shown in Figs. 1 and 2 comprises an arm 6 which functions as a discharge member. The arm 6 is rotatable about a pivoting axis 7. This means that it is movable with respect to the tilting apparatus. Fig. 1 shows two different positions of the arm 6. The arm 6 is rotatable such that an end portion of the arm 6 remote from the pivoting axis 7 can be moved into the container 2 through the opening 3 thereof when the container 2 is tilted by the tilting apparatus in the discharge condition thereof.

The arm 6 in the embodiment as shown comprises two portions extending perpendicularly with respect to each other. The pivoting axis 7 of the arm 6 is located such that in the discharge condition of the tilting apparatus the pivoting axis 7 extends outside the container 2 and parallel to a tilting axis of the tilting apparatus. Due to the shape of the arm 6 an end portion of the arm 6 located remote from its pivoting axis 7 can be moved through the opening 3 into the container 2. At the end portion of the arm 6 a rotatable drum 8 is provided. In case of a retained piece 4 the container 2 the rotating drum 8 can easily loosen this. In a preferred embodiment the drum 8 is drivable in opposite directions. Furthermore, the drum 8 may be provided with protrusions projecting outwardly from the circumferential side thereof. It is noted that alternative embodiments of the arm 6 are conceivable.

In the embodiment as shown in Figs. 1 and 2 the arm 6 is movable parallel to the pivoting axis 7. This makes the device 1 more flexible to loosen caught luggage pieces 4 at different locations within the container 2. In Fig. 2 a second position of the drum 8 is illustrated by a broken line.

In a practical embodiment the arm 6 including the drum 8 will be controlled by an operator via a joy stick (not shown).

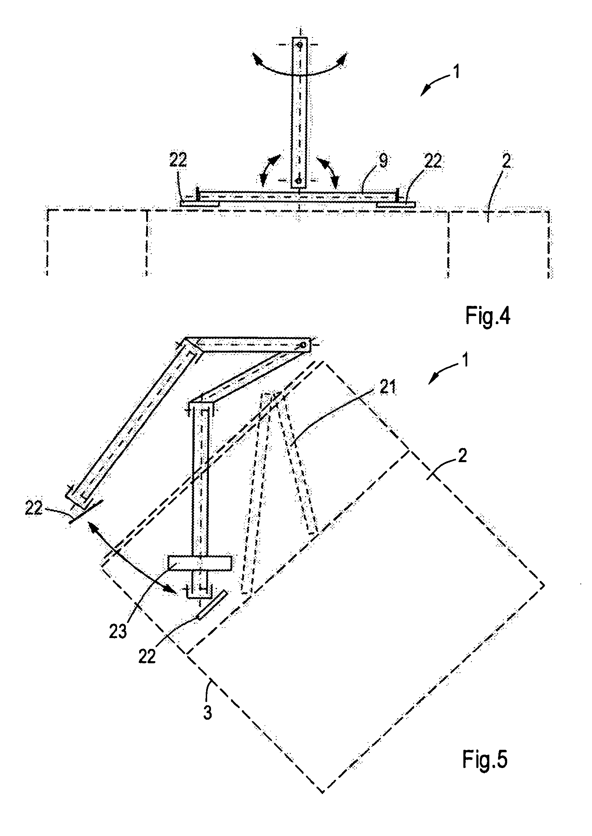

In the discharge condition of the tilting apparatus a closure 21 of the opening 3 of the container 2 is hold by a holding mechanism 9 as shown in Figs. 4 and 5. The holding mechanism 9 comprises first holding elements 22 for holding a closure 21 in the form of a covering sheet, for example, by pressing it against the top of the container 2, and a second holding element 23 for holding a rigid foldable closure 21 in case of the embodiment of a container 2 as shown in Fig. 3a. The holding mechanism 9 is provided with pivots in order to be movable with respect to a supporting frame thereof, since the device 1 comprises a shaking mechanism (not shown) for shaking the container 2 so as to facilitate removing retained pieces 4 out of the container 2.

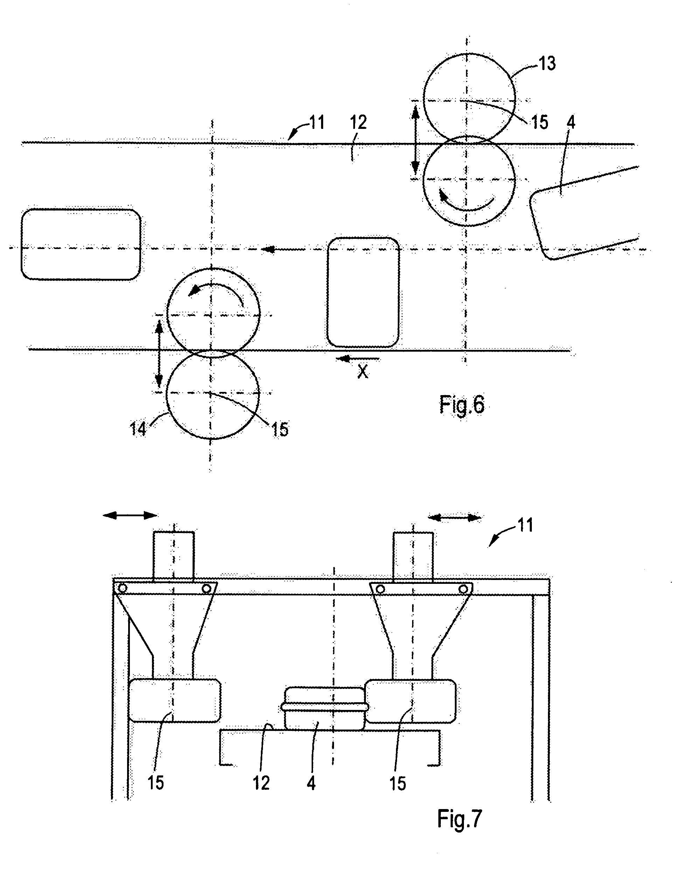

Fig. 1 shows that under unloading conditions the articles 4 fall through the opening 3 of the container 2 onto a conveyor 10 for conveying the articles 4 further towards a desired destination. The articles 4 may have different sizes and different shapes, whereas they will have a random orientation on the conveyor 10. In order to place the articles 4 in a desired orientation the device 1 according to the invention is provided with an orientation conveyor 11 for conveying and reorienting articles 4. An embodiment of the orientation conveyor 11 is shown in Figs. 6 and 7. The embodiment of the orientation conveyor 11 comprises a drivable endless belt 12 including a supporting surface for supporting and transporting the articles 4 in a conveying direction X. Furthermore, rotation members in the form of a first drum 13 and a second drum 14 are located nearby the belt 12 and can be rotatably driven about rotation axes 15 as well as displaced transversely with respect to the conveying direction X. The first and second drums 13, 14 are spaced with respect to each other in the conveying direction X. In this case the rotation axes 15 extend vertically.

Fig. 6 shows the first and second drums 13, 14 each in two different positions: a position above the belt 12 and a position next to the belt 12 as seen from above. Under operating conditions an article 4 passes the first drum 13 and its orientation on the belt 12 as seen from above can be corrected by the first drum 13. After a first reorientation by the first drum 13 the article 4 passes the second drum 14 which may correct the orientation of the article 4 on the belt 12 further. The first and second drums 13, 14 are controlled on the basis of information from a detection device (not shown) which is located upstream of the first drum 13. The detection device detects the orientation of the article 4 on the belt 12 before it arrives at the first drum 13.

It is noted that the orientation conveyor 11 may be used as a separate apparatus for alternative devices, separate from the current device 1 including the tilting apparatus and the arm 6.

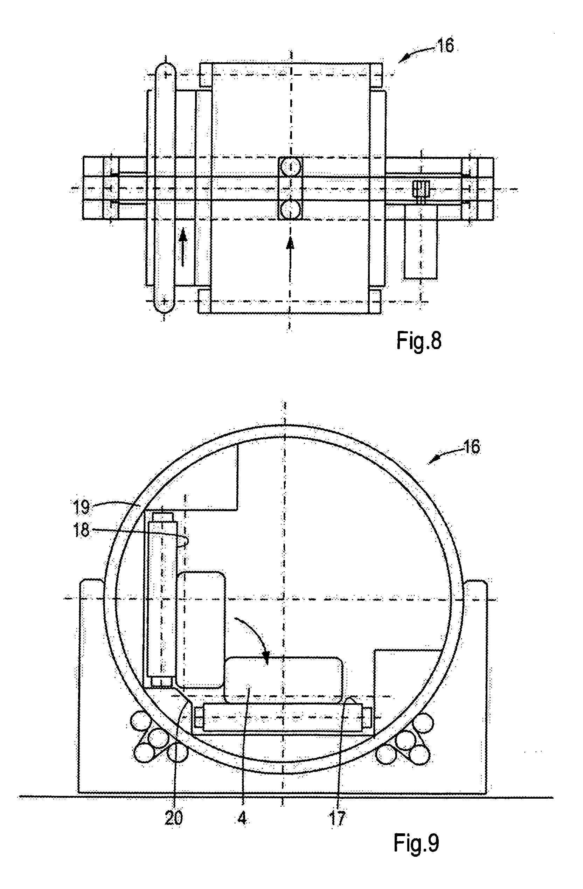

The articles 4 may be treated such that they have a correct orientation on a conveyor, for example on the belt 12 as shown in Figs. 6 and 7 as seen from above, but it is still possible that an article 4 has wheels for easy moving the article 4 by a user, which wheels may be in contact with the driven conveyor belt 12. This may have disadvantageous effects during further transport by a conveyor. For example, at a transfer location where a successive conveyor belt runs upwardly the wheels may be driven by one of the conveyor belts at the transfer, whereas the article 4 stays at the same location. Therefore, the device 1 is provided with a turning apparatus 16 for turning articles 4 such that the wheels of an article 4 become free of contact with a conveyor belt, see Figs. 8 and 9.

The turning apparatus 16 comprises a first and second drivable conveyor belt 17, 18 as supporting surfaces for supporting and transporting the articles 4. The first and second, conveyor belt 17, 18 extend parallel to each other. The first conveyor belt 17 and the second conveyor belt 18 are mutually angled, in this case at an angle of substantially 90° about a longitudinal axis extending parallel to the belts 17, 18. Both conveyor belts 17, 18 are mounted to a frame 19 which is rotatable between a position which the first conveyor belt 17 is located lower than the second conveyor belt 13 and a position in which the second conveyor belt 18 is located lower than the first conveyor belt 17. The device 1 is further provided with a wheel detection device (not shown) which is located upstream of the turning apparatus 16. The wheel detection device detects whether a passing article 4 comprises wheels at the outer side thereof and, if so, the location of the wheels at the article 4 with respect to the upper surface of the first conveyor belt 17 or second conveyor belt 18, depending on which belt is located at a lower level.

When an article 4 of which the wheels are facing downwardly arrives at an input of the turning apparatus 16 on the first conveyor belt 17, the article 4 will be turned upside down by the turning apparatus 16 such that it will leave the turning apparatus 16 on the second conveyor belt 18. In that orientation the wheels of the article 4 will be free of the second conveyor 18, in this case facing upwardly. The turning apparatus 16 will be controlled by a control device (not shown) on the basis of information received from the wheel detection device. The frame 19 will maintain its position until an article 4 arrives at the input of the turning apparatus 16 whereas the wheels of the article 4 rest on the second conveyor belt 18, which is then located at a lower level than the first conveyor belt 17. Then the turning apparatus 16 will rotate back such that the second conveyor belt 18 goes up and the first conveyor belt 17 goes down. The article 4 turns upside down and leaves the turning apparatus 16 on the first conveyor belt 17 having its wheels facing upwardly. During the turning movement the first conveyor belt 17 and second conveyor belt 18 may still be driven. In this embodiment the frame 19 of the turning apparatus 16 rotates in opposite directions at an angle of about 90°

In order to optimize the functioning of the turning apparatus 16 it may be provided with a cam 20 which is located at a location where planes through the upper surfaces of the first conveyor belt 17 and the second conveyor belt 18 intersect. The cam 20 is adapted such that its width is smaller than the widths of the first and second conveyor belts 17, 18 and projects above the upper surfaces of the first conveyor belt 17, 18 as seen in cross section of the first conveyor belt 17 and the second conveyor belt 18, respectively. Preferably, the width of the cam 20 is smaller than the dimensions of any side of the articles 4 since this improves the tilting movement of an article 4 touching the cam 20 when turning the frame 19.

From the foregoing, it will be clear that the invention provides a device for unloading the contents of a container which has optimal unloading characteristics

The invention is not limited to the embodiments shown in the drawings and described hereinbefore, which may be varied in different manners within the scope of the claims and their technical equivalents. For example, the arm may have an alternative shape, for example telescopically driven.

## Claims

1. A device (1) for unloading the contents of a container (2), comprising a tilting apparatus for tilting a container (2) towards an opening (3) thereof in a discharge condition of the apparatus, further the device (1) comprises a discharge member eft; which is movable with respect to the tilting apparatus and controllable such that at least a portion of the discharge member (6) can be moved into the container (2) through the opening (3) thereof when the container (2) is tilted by the tilting apparatus in the discharge condition thereof, and **characterized in that**
the discharge member comprises an arm (6) having an end portion which can be moved into the container (2), wherein the end portion is provided with an activating element (8) which is movable with respect to the arm (6) for loosening retained contents in the container (2).

2. A device (1) according to claim 1, wherein the activating element is a rotatable drum (8).

3. A device (1) according to claim 2, wherein the rotatable drum (8) is drivable in opposite directions.

4. A device (1) according to claims 2 or 3, wherein the drum (8) is provided with protrusions projecting outwardly from the circumferential side thereof.

5. A device (1) according to one of the preceding claims, wherein the discharge member (6) is pivotable about a pivoting axis (7).

6. A device (1) according to claim 5, wherein the discharge member (6) is movable parallel to the pivoting axis (7).

7. A device (1) according to one of the preceding claims, wherein the discharge member (6) is controllable by a remote control device.

8. A device (1) according to one of the preceding claims, wherein the device (1) is provided with an orientation conveyor (11) for conveying and reorienting unloaded articles (4) of the container (2), the conveyor (11) comprising a supporting surface (12) for supporting and transporting the articles (4) which is movable in a conveying direction (X), a detection device for detecting the orientation of an article (4) on the supporting surface (12), drivable rotation members (13, 14) being rotatable about rotation axes (15) extending upwardly and being located downstream of the detection device and spaced with respect to each other in the conveying direction (X), wherein the rotation members (13, 14) are movable transversely with respect to the conveying direction (X), and a control device for controlling a drive of the rotation members (13, 14) on the basis of information received from the detection device.

9. A device (1) according to one of the preceding claims, wherein the device (1) is provided with a turning apparatus (16) for conveying and turning an article (4) comprising a supporting surface (17, 13) for supporting the article (4), a wheel detection device for detecting wheels that may be present at the outer side of an article (4) and for detecting the location of the wheels at the article (4) on the supporting surface (17, 18), a turning mechanism for turning an article (4) such that the wheels thereof become free of the supporting surface (17, 18), wherein the turning mechanism is located downstream of the wheel detection device, and a control device for controlling a drive of the turning mechanism on the basis of information received from the wheel detection device.

10. A device according to claim 8, wherein the rotation speed of the rotation members (13, 14) is controllable.

11. A device according to claim 9, wherein the supporting surface is formed by a first drivable conveyor belt (17) and a second drivable conveyor belt (18), both for supporting and transporting an article (4), extending substantially parallel to each other but angled with respect to each other about a longitudinal axis extending parallel to the belts (17, 18), wherein the turning mechanism can rotate the first conveyor belt (17) and second conveyor belt (18) synchronously about an axis extending parallel to the longitudinal axis between a position in which the second conveyor belt (18) is located at a substantially higher level than the first conveyor belt (17) and a position in which the first conveyor belt (17) is located at a substantially higher level than the second conveyor belt (18).

12. A device according to claim 11, wherein the turning apparatus (16) is provided with a cam (20) which is located at a location where planes through upper surfaces of the first conveyor belt (17) and the second conveyor belt (18) intersect, wherein the cam (20) is adapted such that its width is smaller than the widths of the belts (17, 18) and such that it projects above the upper surfaces of the first conveyor belt. (17) and second conveyor belt (18) as seen in cross section of the belts (17, 18).

## Patentansprüche

1. Vorrichtung (1) zum Entladen des Inhalts eines Behälters (2), mit einer Kippeinrichtung zum Kippen eines Behälters (2) zu einer Öffnung (3) des Behälters hin in einem Entladezustand der Einrichtung, wobei die Vorrichtung (1) ferner ein Entladeelement (6) aufweist, das bezüglich der Kippeinrichtung beweglich und derart steuerbar ist, dass mindestens ein Abschnitt des Entladeelements (6) durch die Öffnung (3) des Behälters in den Behälter (2) bewegt werden kann, wenn der Behälter (2) durch die Kippeinrichtung in ihren Entladezustand gekippt ist,
**dadurch gekennzeichnet, dass**
das Entladeelement einen Arm (6) mit einem Endabschnitt aufweist, der in den Behälter (2) bewegt werden kann, wobei der Endabschnitt ein Aktivierungselement (8) aufweist, das bezüglich des Arms (6) beweglich ist, um im Behälter (2) zurückbleibenden Inhalt zu lösen.

2. Vorrichtung (1) nach Anspruch 1, wobei das Aktivierungselement eine drehbare Trommel (8) ist.

3. Vorrichtung (1) nach Anspruch 2, wobei die drehbare Trommel (8) in entgegengesetzte Richtungen antreibbar ist.

4. Vorrichtung (1) nach Anspruch 2 oder 3, wobei die Trommel (8) Vorsprünge aufweist, die von ihrer Umfangsseite nach außen hervorstehen.

5. Vorrichtung (1) nach einem der vorangehenden Ansprüche, wobei das Entladeelement (6) um eine Drehachse (7) schwenkbar ist.

6. Vorrichtung (1) nach Anspruch 5, wobei das Entladeelement (6) parallel zur Drehachse (7) beweglich ist.

7. Vorrichtung (1) nach einem der vorangehenden Ansprüche, wobei das Entladeelement (6) durch eine Fernsteuerung steuerbar ist.

8. Vorrichtung (1) nach einem der vorangehenden Ansprüche, wobei die Vorrichtung (1) eine Ausrichtungstransporteinrichtung (11) zum Transportieren und neu Ausrichten entladener Artikel (4) des Behälters (2) aufweist, wobei die Transporteinrichtung (11) eine Trägerfläche (12) zum Tragen und Transportieren der Artikel (4) aufweist, die in eine Transportrichtung (X) beweglich ist, eine Erfassungseinrichtung zum Erfassen der Ausrichtung eines Artikels (4) auf der Trägerfläche (12), antreibbare Drehelemente (13, 14), die um Drehachsen (15) drehbar sind, die sich nach oben erstrecken und stromabwärts von der Erfassungseinrichtung angeordnet und in der Transportrichtung (X) voneinander beabstandet sind, wobei die Drehelemente (13, 14) quer zur Transportrichtung (X) beweglich sind, und eine Steuereinrichtung zum Steuern eines Antriebs der Drehelemente (13, 14) auf der Basis von von der Erfassungseinrichtung empfangener Information.

9. Vorrichtung (1) nach einem der vorangehenden Ansprüche, wobei die Vorrichtung (1) eine Dreheinrichtung (16) zum Transportieren und Drehen eines Artikels (4) mit einer Trägerfläche (17, 18) zum Tragen des Artikels (4), eine Raderfassungseinrichtung zum Erfassen von Rädern, die an der Außenseite eines Artikels (4) angebracht sein können, und zum Erfassen der Position der am Artikel (4) angebrachten Räder auf der Trägerfläche (17, 18), einen Drehmechanismus zum Drehen eines Artikels (4) derart, dass seine Räder von der Trägerfläche (17, 18) frei kommen, wobei der Drehmechanismus stromabwärts von der Raderfassungseinrichtung angeordnet ist, und eine Steuereinrichtung zum Steuern eines Antriebs des Drehmechanismus auf der Basis von von der Raderfassungseinrichtung empfangener Information aufweist.

10. Vorrichtung nach Anspruch 8, wobei die Drehzahl der Drehelemente (13, 14) steuerbar ist.

11. Vorrichtung nach Anspruch 9, wobei die Trägerfläche durch ein erstes antreibbares Förderband (17) und ein zweites antreibbares Förderband (18) gebildet wird, die beide zum Tragen und Transportieren eines Artikels (4) dienen und sich im Wesentlichen parallel zueinander, aber relativ zueinander unter einem Winkel um eine sich parallel zu den Bändern (17, 18) erstreckende Längsachse erstrecken, wobei der Drehmechanismus das erste Förderband (17) und das zweite Förderband (18) um eine sich parallel zur Längsachse erstreckende Achse synchron drehen kann zwischen einer Position, in der das zweite Förderband (18) sich auf einer wesentlich höheren Höhe als das erste Förderband (17) befindet, und einer Position, in der das erste Förderband (17) sich auf einer wesentlich höheren Höhe als das zweite Förderband (18) befindet.

12. Vorrichtung nach Anspruch 11, wobei die Dreheinrichtung (16) eine Nocke (20) aufweist, die an einer Position angeordnet ist, wo Ebenen durch obere Flächen des ersten Förderbandes (17) und des zweiten Förderbandes (18) sich schneiden, wobei die Nocke (20) derart angepasst ist, dass ihre Breite kleiner ist als die Breiten der Bänder (17, 18), und derart, dass sie betrachtet im Querschnitt der Bänder (17, 18) über den oberen Flächen des ersten Förderbandes (17) und des zweiten Förderbandes (18) hervorsteht.

## Revendications

1. Dispositif (1) pour décharger les contenus d'un contenant (2), comprenant un appareil d'inclinaison pour incliner un contenant (2) vers une ouverture (3) de celui-ci dans une condition de décharge de l'appareil, le dispositif (1) comprenant en outre un élément de décharge (6) qui est mobile par rapport à l'appareil d'inclinaison et peut être commandé de sorte qu'au moins une partie de l'élément de décharge (6) puisse être déplacée dans le contenant (2) à travers l'ouverture (3) de celui-ci lorsque le contenant (2) est incliné par l'appareil d'inclinaison dans la condition de décharge de celui-ci, et **caractérisé en ce que** l'élément de décharge comprend un bras (6) possédant une partie d'extrémité qui peut être déplacée dans le contenant (2), dans lequel la partie d'extrémité est pourvue d'un élément d'activation (8) qui est mobile par rapport au bras (6) pour défaire un contenu retenu dans le contenant (2).

2. Dispositif (1) selon la revendication 1, dans lequel l'élément d'activation est un tambour rotatif (8).

3. Dispositif (1) selon la revendication 2, dans lequel le tambour rotatif peut être entraîné dans des directions opposées.

4. Dispositif (1) selon les revendications 2 ou 3, dans lequel le tambour (8) est pourvu de protubérances faisant saillie vers l'extérieur à partir du côté circonférentiel de celui-ci.

5. Dispositif (1) selon l'une des revendications précédentes, dans lequel l'élément de décharge (6) peut pivoter autour d'un axe de pivotement (7).

6. Dispositif (1) selon la revendication 5, dans lequel l'élément de décharge (6) est mobile parallèlement à l'axe de pivotement (7).

7. Dispositif (1) selon l'une des revendications précédentes, dans lequel l'élément de décharge (6) peut être commandé par un dispositif de commande à distance.

8. Dispositif (1) selon l'une des revendications précédentes, dans lequel le dispositif (1) est pourvu d'un transporteur à orientation (11) pour transporter et réorienter des articles déchargés (4) du contenant (2), le transporteur (11) comprenant une surface de support (12), pour supporter et transporter les articles (4), qui est mobile dans une direction de transport (X), un dispositif de détection pour détecter l'orientation d'un article (4) sur la surface de support (12), des éléments de rotation pouvant être entraînés (13, 14) rotatifs autour d'axes de rotation (15) s'étendant vers le haut et positionnés en aval du dispositif de détection et espacés l'un par rapport à l'autre dans la direction de transport (X), dans lequel les éléments de rotation (13, 14) sont mobiles transversalement par rapport à la direction de transport (X), et un dispositif de commande pour commander un entraînement des éléments de rotation (13, 14) en fonction d'informations reçues à partir du dispositif de détection.

9. Dispositif (1) selon l'une des revendications précédentes, dans lequel le dispositif (1) est pourvu d'un appareil de giration (16) pour transporter et faire tourner un article (4) comprenant une surface de support (17, 18) pour supporter l'article (4), un dispositif de détection de roue pour détecter des roues qui peuvent être présentes sur le côté extérieur d'un article (4) et pour détecter l'emplacement des roues sur l'article sur la surface de support (17, 18), un mécanisme de giration pour faire tourner un article (4) de sorte que les roues de celui-ci se libèrent de la surface de support (17, 18), dans lequel le mécanisme de giration est positionné en aval du dispositif de détection de roue, et un dispositif de commande pour commander un entraînement du mécanisme de giration en fonction d'informations reçues à partir du dispositif de détection de roue.

10. Dispositif selon la revendication 8, dans lequel la vitesse de rotation des éléments de rotation (13, 14) peut être commandée.

11. Dispositif selon la revendication 9, dans lequel la surface de support est formée par une première courroie transporteuse pouvant être entraînée (17) et une seconde courroie transporteuse pouvant être entraînée (18), les deux pour supporter et transporter un article (4), s'étendant de façon sensiblement parallèle l'une à l'autre mais inclinées l'une par rapport à l'autre autour d'un axe longitudinal s'étendant parallèlement aux courroies (17, 18), dans lequel le mécanisme de giration peut faire tourner la première courroie transporteuse (17) et la seconde courroie transporteuse (18) de façon synchrone autour d'un axe s'étendant parallèlement à l'axe longitudinal entre une position dans laquelle la seconde courroie transporteuse (18) est positionnée à un niveau sensiblement plus élevé que la première courroie transporteuse (17) et une position dans laquelle la première courroie transporteuse (17) est positionnée à un niveau sensiblement plus élevé que la seconde courroie transporteuse (18).

12. Dispositif selon la revendication 11, dans lequel l'appareil de giration (16) est pourvu d'une came (20) qui est positionnée dans un emplacement où des plans à travers des surfaces supérieures de la première courroie transporteuse (17) et la seconde courroie transporteuse (18) se croisent, dans lequel la came (20) est adaptée de sorte que sa largeur soit inférieure aux largeurs des courroies (17, 18) et de sorte qu'elle fasse saillie au-dessus des surfaces supérieures de la première courroie transporteuse (17) et la seconde courroie transporteuse (18) en vue en section transversale des courroies (17, 18).
